(19) Europäisches Patentamt
European Patent Office
Office européen des brevets

(11) **EP 4 401 009 A1**

(12) **EUROPEAN PATENT APPLICATION**

(43) Date of publication:
**17.07.2024 Bulletin 2024/29**

(21) Application number: **23195955.2**

(22) Date of filing: **07.09.2023**

(51) International Patent Classification (IPC):
**G06N 3/045** (2023.01)    **G06N 3/084** (2023.01)

(52) Cooperative Patent Classification (CPC):
**G06N 3/045; G06N 3/084**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.01.2023 KR 20230003628**

(71) Applicant: **Samsung Electronics Co., Ltd.
Suwon-si, Gyeonggi-do 16677 (KR)**

(72) Inventors:
• **Kim, Gunhee**
  **Suwon-si, Gyeonggi-do 16678 (KR)**
• **Cho, Hyuntae**
  **Suwon-si, Gyeonggi-do 16678 (KR)**

(74) Representative: **Grünecker Patent- und
Rechtsanwälte
PartG mbB
Leopoldstraße 4
80802 München (DE)**

(54) **METHOD AND APPARATUS WITH NEURAL NETWORK TRAINING**

(57)    A processor-implemented method may include generating respective first neural network differential data by differentiating a respective output of each layer of a first neural network with respect to input data provided to the first neural network that estimates output data from the input data, by a forward propagation process of the first neural network, generating, using a second neural network, an output differential value of the output data with respect to the input data using the respective first neural network differential data, and training the first neural network and the second neural network based on ground truth data of the output data and ground truth data of the output differential value.

FIG. 1

EP 4 401 009 A1

**Description**

BACKGROUND

1. Field

The following description relates to a method and apparatus with neural network training.

2. Description of Related Art

In a typical backpropagation process of a neural network, a differential (first derivative) value with respect to an input (e.g., for a backpropagation of the neural network provided the input) may be calculated to calculate the corresponding gradient to adjust the neural network. When the differential value with respect to the input needs to be learned because ground truth data of the calculated differential value exists, a process of calculating a second-order differential (e.g., second derivative) may have to be performed to calculate the gradient.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

The claims are defined in the independent claims. Preferred embodiments are specified in the dependent claims.

In a first general aspect, here is provided a processor-implemented method including generating respective first neural network differential data by differentiating a respective output of each layer of a first neural network with respect to input data provided to the first neural network that estimates output data from the input data, by a forward propagation process of the first neural network, generating, using a second neural network, an output differential value of the output data with respect to the input data using the respective first neural network differential data, and training the first neural network and the second neural network based on ground truth data of the output data and ground truth data of the output differential value.

The method may include generating, by a layer of the second neural network, second differential data obtained by differentiating, with respect to the input data, an output of a layer of the first neural network from first differential data, of the respective first neural network differential data, obtained by differentiating an output of another layer previous to the layer of the first neural network, with respect to the input data, based on parameters of the first neural network and a first differential value of an activation function of the layer of the first neural network.

A second differential value of the second differential data with respect to a parameter of the layer of the first neural network may be calculated by multiplying the first differential data by the first differential value.

An activation function of a layer of the second neural network may include a function that multiplies a differential value of an activation function of a layer of the first neural network that corresponds to the layer of the second neural network.

The method may include storing a respective differential value of a corresponding activation function for each layer of the first neural network in a forward propagation process of the first neural network.

Parameters of the first neural network for the estimation of the output data may be the same as parameters of the second neural network.

The generating of the respective first neural network differential data also may include determining select input data among plural input data, for which a calculation of differential value is determined to be needed and, for each of the select input data, storing corresponding respective first neural network differential data obtained by respectively differentiating the outputs of each layer of the first neural network with a corresponding select input data.

In a general aspect, here is provided an electronic apparatus including a processor configured to estimate output data with respect to input data by differentiating a respective output of each layer of a first neural network with respect to input data provided to the first neural network by a forward propagation process of the first neural network and generate an output differential value of the output data with respect to the input data using respective first neural network differential data through forward propagation of a second neural network, and a memory configured to store the differential data.

The memory may be further configured to store a respective differential value of an activation function for each layer of the first neural network, and the respective differential value is obtained through the forward propagation of the first neural network.

An activation function of a layer of the second neural network may include a function that multiplies a differential value of an activation function of a layer of the first neural network that corresponds to the layer of the second neural network.

Parameters of the first neural network for the estimation of the output data may be the same as parameters of the second neural network.

The first neural network and the second neural network may be trained based on a first loss function and a second loss function, and the first loss function is based on ground truth of the output data and an estimated value of the output data that is output from the forward propagation of the first neural network, and the second loss function is based on the output differential value and ground truth data of the output differential value with respect to the input data.

The second neural network may include a layer defined to output second differential data obtained by differentiating, with respect to the input data, an output of a layer of the first neural network from first differential data, of the respective first neural network differential data, obtained by differentiating an output of another layer, previous to the layer of the first neural network, with respect to the input data, based on parameters of the first neural network and a first differential value of an activation function of the layer of the first neural network.

A second differential value of the second differential data with respect to a parameter of the layer of the first neural network may be calculated by multiplying the first differential data by the first differential value.

The processor may be configured to calculate differential data obtained by differentiating the output of each layer of the first neural network with respect to the input data.

In the calculating of the differential data, the processor is configured to determine select input data among plural input data, for which a calculation of a differential value is determined to be needed and, for each of the select input data, calculate the differential data corresponding respectively to first neural network differential data obtained by respectively differentiating the outputs of each layer of the first neural network with a corresponding select input data.

In a general aspect, here is provided a processor-implemented method including training a first neural network and a second neural network in parallel, including generating, using the first neural network provided input data, differential values of respective activation functions of each layer of the first neural network, generating, using the second neural network, an output differential value as output data with respect to the input data, and respectively training the first neural network and the second neural network using respective same gradients generated based on a loss that is dependent on ground truth data of the output differential value.

In a general aspect, here is provided a processor-implemented method including, for each layer of a first neural network provided input data, obtaining a respective Jacobian matrix and a respective first differential value of a corresponding activation of a corresponding layer of the first neural network, generating, using a second neural network, a second differential value based on the Jacobian matrices and the respective first differential values, and training shared parameters of the first neural network and the second neural network based on respective ground truth data corresponding to the input data and an estimated output value of the first neural network provided the input data, and the generated second differential value.

The method may include determining a first differential value, upon a completion of an obtainment of the Jacobian matrix of the respective Jacobian matrices.

The training may include determining a gradient of a shared parameter, between the first neural network and the second neural network, based on a first loss of the first neural network and a backpropagation, through the second neural network, of a second loss function of the second neural network. Other features and aspects will be apparent from the following detailed description, the drawings, and the claims.

BRIEF DESCRIPTION OF THE DRAWINGS

FIG. 1 illustrates an example neural network according to one or more embodiments.
FIG. 2 illustrates an example method of a training neural network for obtaining a differential value of output data with respect to input data according to one or more embodiments.
FIG. 3 illustrates an example framework for training a neural network according to one or more embodiments.
FIG. 4 illustrates an example input/output data for each layer of a neural network according to one or more embodiments.
FIG. 5 illustrates an example electronic apparatus according to one or more embodiments.

Throughout the drawings and the detailed description, unless otherwise described or provided, the same, or like, drawing reference numerals may be understood to refer to the same, or like, elements, features, and structures. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences within and/or of operations described herein are merely examples, and are not limited to those set forth herein, but may be changed as will be apparent after an understanding of the disclosure of this application, except for sequences within and/or of operations necessarily occurring in a certain order. As another example, the sequences of and/or within operations may be performed in parallel, except for at least a portion of sequences of and/or within operations necessarily occurring in an order, e.g., a certain order. Also, descriptions of features that are known after an understanding of the disclosure of this application may be omitted for increased clarity and conciseness.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Throughout the specification, when a component or element is described as being "on", "connected to," "coupled to," or "joined to" another component, element, or layer it may be directly (e.g., in contact with the other component or element) "on", "connected to," "coupled to," or "joined to" the other component, element, or layer or there may reasonably be one or more other components, elements, layers intervening therebetween. When a component or element is described as being "directly on", "directly connected to," "directly coupled to," or "directly joined" to another component or element, there can be no other elements intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

The terminology used herein is for describing various examples only and is not to be used to limit the disclosure. The articles "a," "an," and "the" are intended to include the plural forms as well, unless the context clearly indicates otherwise. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof, or the alternate presence of an alternative stated features, numbers, operations, members, elements, and/or combinations thereof. Additionally, while one embodiment may set forth such terms "comprise" or "comprises," "include" or "includes," and "have" or "has" specify the presence of stated features, numbers, operations, members, elements, and/or combinations thereof, other embodiments may exist where one or more of the stated features, numbers, operations, members, elements, and/or combinations thereof are not present.

As used herein, the term "and/or" includes any one and any combination of any two or more of the associated listed items. The phrases "at least one of A, B, and C", "at least one of A, B, or C", and the like are intended to have disjunctive meanings, and these phrases "at least one of A, B, and C", "at least one of A, B, or C", and the like also include examples where there may be one or more of each of A, B, and/or C (e.g., any combination of one or more of each of A, B, and C), unless the corresponding description and embodiment necessitates such listings (e.g., "at least one of A, B, and C") to be interpreted to have a conjunctive meaning.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

As noted above, there may be situations when a processing of a second-order differential may be performed to calculate a gradient for training an underlying network. However, solving for the second-order differential may require complex calculations, such as performing a Hessian matrix to find the gradient because of the presence of the second order differential. Herein, references, to "differentiation", "differential", as well as first-order and second-order differentials have their traditional meaning in the context of differential calculus.

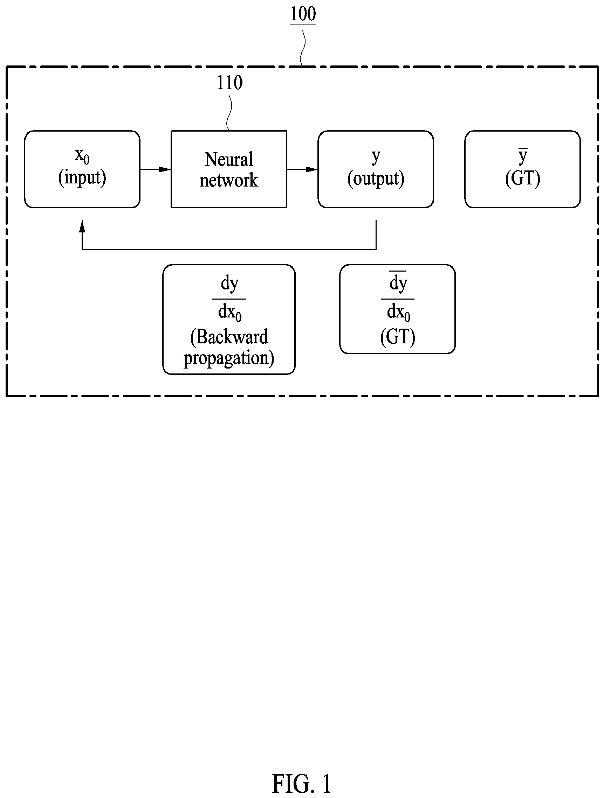

FIG. 1 illustrates an example neural network that obtains an output differential value $\dfrac{dy}{dx_0}$ of output data y with respect to input data x(e.g., $x_0$) according to one or more embodiments.

Referring to FIG. 1, in a non-limiting example, a computing device 100 may include a machine learning model, such as a neural network 110, which may output y with respect to input data x. In an example, when ground truth data with respect to the output of the neural network 110 is $\bar{y}$, a first loss function for training may be defined as $L_1(y - \bar{y})$. In a process of training the neural network 110, a gradient $\dfrac{dL_1}{dw_i}$ with respect to the first loss function may be calculated and applied through backpropagation so as to update parameters (or a weight) of the neural network 110.

In an example, the neural network 110 may be trained to output y and $\dfrac{dy}{dx_0}$. For example, the neural network 110 outputting $\dfrac{dy}{dx_0}$ may be the neural network 110 for a task, such as a physical simulation in which a differential value with respect to an input is physically meaningful, or relevant, to the simulation. In this case, training data of the neural network 110 may include ground truth data $\dfrac{\overline{dy}}{dx_0}$ of the differential value $\dfrac{\overline{dy}}{dx_0}$ of the output data with respect to the input data. A second loss function for training the differential value of the output data with respect to the input data may be defined as $L_2\left(\dfrac{dy}{dx_0} - \dfrac{\overline{dy}}{dx_0}\right)$. Since a gradient with respect to the second loss function is

$$\frac{dL_2}{dw_i} = \frac{d}{dw_i}\frac{dy}{dx_0} \cdot \frac{d}{dt}L_2\left(t - \frac{\overline{dy}}{dx_0}\right)$$

(i.e., a second order term), a second-order differential $\dfrac{d}{dw_i}\dfrac{dy}{dx_0}$ or $\dfrac{d}{dw_i}\dfrac{dx_n}{dx_0}$ may be needed to be calculated. In the second order term, t means $\dfrac{dy}{dx_0}$.

In an example, the neural network 110 outputting not only y but also $\dfrac{dy}{dx_0}$ with respect to the input data $x_0$ may include a first neural network and a second neural network. The first neural network may be a neural network trained to estimate the output data y with respect to the input data $x_0$. The second neural network may be a neural network trained to obtain or (calculate) $\dfrac{dy}{dx_0}$ with respect to the input data $x_0$. The second neural network obtaining $\dfrac{dy}{dx_0}$ separately from the first neural network may also be used to obtain $\dfrac{dy}{dx_0}$ with respect to the input data $x_0$, without

a direct calculation of a second-order differential. A training method of the neural network including the first neural network and the second neural network according to an example is described in greater detail below.

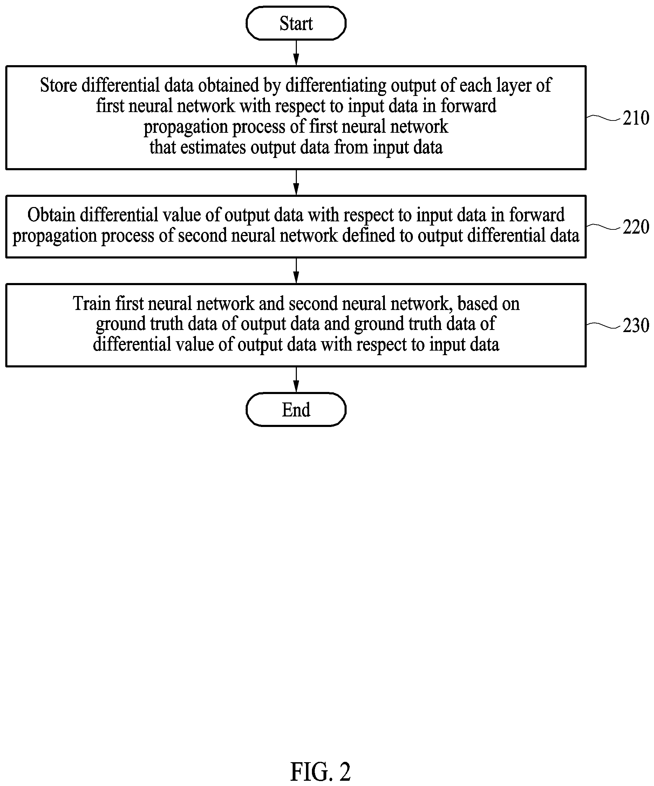

FIG. 2 illustrates an example training method of a neural network for obtaining a differential value of output data (i.e., an output differential value) with respect to input data according to one or more embodiments.

Referring to FIG. 2, in a non-limiting example, a training method may include operation 210 that stores differential data obtained by differentiating an output of each layer of a first neural network with respect to input data in a forward propagation process of the first neural network that estimates output data y from input data $x_0$. For example, the differential data may include a Jacobian matrix. Hereinafter, the Jacobian matrix is described as an example. While the Jacobian matrix will be used below for explanatory purposes, the differential data may include various types of data indicating a value obtained by differentiating the output of each layer of the first neural network with respect to the input data and is not limited to the Jacobian matrix.

For example, a layer of the first neural network may be expressed as Equations 1 and 2 below.

Equation 1:

$$z_i = W_i x_i + b_i$$

Equation 2:

$$x_{i+1} = f_i(z_i)$$

In Equations 1 and 2, $x_i$ may denote an input of an i+1-th layer of the first neural network, $W_i$ may denote a parameter (or a weight) of the i+1-th layer of the first neural network, and $b_i$ may denote a bias of the i+1-th layer of the first neural network, and $f_i$ may denote an activation function of the i+1-th layer of the first neural network. For example, an input to the neural network would be represented by $x_0$ to the first hidden layer of the neural network, $z_0$ would represent the respective summations (of $w_0 x_0$) of each node of the first layers, and $f_0(z_0)$ would be the activation output of the first layer, which becomes the input $x_{i+1}$ to the next layer.

When the neural network has n number of layers, a differential of final output data y (or an output $x_n$ of an n-th layer) of the neural network with respect to the input data $x_0$ (or the input of a first layer of the neural network) of the neural network may be expressed as in Equation 3.

Equation 3:

$$\frac{dy}{dx_0} = \frac{dx_{n-1}}{dx_0} \frac{dx_n}{dx_{n-1}} = \frac{dx_k}{dx_0} \times \Pi_{i=k}^{n-1} \frac{dx_{i+1}}{dx_i}$$

In the forward propagation process of the training of the first neural network, the Jacobian matrix obtained by differentiating the output of each layer of the first neural network with respect to the input data may be stored. The Jacobian matrix obtained by differentiating an output of an i-th layer of the first neural network with the input data may

$$\frac{dx_i}{dx_0}$$

be represented as $J(x_i)(x_0)$. $J(x_i)(x_0)$ may correspond to ⎯⎯⎯. Considering Equation 3, the Jacobian matrix obtained by differentiating the output data of the first neural network with respect to the input data may be expressed as in Equation 4 below.

Equation 4:

$$J(x_n)(x_0) = \Pi_{i=0}^{n-1} J(x_{i+1})(x_i) = J(x_k)(x_0) \times \Pi_{i=k}^{n-1} J(x_{i+1})(x_i)$$

For example, noting that the term 'first' is merely being used to differentiate from another layer and not to insinuate a very first layer, when a first layer is referred to as an i+1-th layer (with I starting at zero), a second Jacobian matrix $J(x_{i+i})(x_0)$ obtained by differentiating an output $x_{i+1}$ of the first layer with respect to the input data $x_0$ may be calculated by multiplying a first Jacobian matrix $J(x_i)(x_0)$ by a value

$$\frac{dx_{i+1}}{dx_i}$$

obtained by differentiating the output of the first layer with respect to an output of a previous layer of the first layer. The first Jacobian matrix $J(x_i)(x_0)$ may be obtained by differentiating an output x; of the previous layer of the first layer with respect to the input data $x_0$.

In Equation 1, based on

$$\frac{dz_i}{dx_i} = W_i,$$

$J(z_i)(x_0)$ may be expressed as in Equation 5 below.

Equation 5:

$$J(z_i)(x_0) = \frac{dz_i}{dx_i}\frac{dx_i}{dx_0} = W_i \times J(x_i)(x_0)$$

In Equation 2, based on

$$\frac{dx_{i+1}}{dz_i} = f_i'(z_i),$$

$J(x_{i+1})(x_0)$ may be expressed as in Equation 6 below.

Equation 6:

$$J(x_{i+1})(x_0) = \frac{dx_{i+1}}{dz_i}\frac{dz_i}{dx_0} = f_i'(z_i) \times J(z_i)(x_0) = f_i'(z_i) \times W_i \times J(x_i)(x_0)$$

When $J(x_i)(x_0)$ is expressed as $\tilde{x}_i$, a layer of the second neural network may be expressed as in Equation 7 and Equation 8 below.

Equation 7:

$$\tilde{z}_i = W_i\tilde{x}_i$$

Equation 8:

$$\tilde{x}_{i+1} = g_i(\tilde{z}_i) = f_i'(z_i) \times \tilde{z}_i$$

In an example, parameters of the second neural network (i.e., second parameters) may be the same as parameters of the first neural network (i.e., first parameters)( e.g., the parameters may be shared). The second neural network may include a layer defined to output the second Jacobian matrix $\tilde{x}_{i+1}$ (or $J(x_{i+1})(x_0)$) obtained by differentiating the output $x_{i+1}$ of the first layer of the first neural network with respect to the input data $x_0$ from the first Jacobian matrix $\tilde{x}_i$ (or $J(x_i)(x_0)$) obtained by differentiating the output $x_i$ of the previous layer of the first layer with respect to the input data $x_0$, based on the parameter $W_i$ of the first layer of the first neural network and a differential value

$$f_i'(z_i)$$

(ie.,

$$\frac{dx_{i+1}}{dz_i} = f_i'(z_i),$$

$J(x_{i+1})(x_0)$ ) (i.e., a first differential value) of an activation function of the first layer.

An activation function of a second layer of the second neural network may include a function that multiplies a differential value (i.e., a second differential value) of an activation function of the first neural network corresponding to the second layer. For example, when the second layer is an i+1-th layer of the second neural network, an activation function $g_i$ of the second layer of the second neural network may include a function

$$g_i(\tilde{z}_i) = f_i'(z_i) \times \tilde{z}_i$$

that multiplies a differential value with respect to z; of the activation function $f_i$ of the first neural network corresponding the second layer.

In an example, the training method may include storing a differential value of an activation function of each layer of the first neural network in a forward propagation process of the first neural network. That is, in the forward propagation process of the first neural network, $f_i'(z_i)$ may be stored. Forward propagation of the second neural

$$\tilde{x}_i = \frac{dx_i}{dx_0} = J(x_i)(x_0)$$

network may be performed by using $\tilde{x}_i = \frac{dx_i}{dx_0} = J(x_i)(x_0)$ and $f_i'(z_i)$ that are stored in the forward propagation process of the first neural network.

In an example, the training method may include operation 220 that obtains a differential value of output data (i.e., an output differential value) with respect to input data in the forward propagation process of the second neural network defined to output differential data (e.g., a Jacobian matrix). When the second neural network includes n number of layers, $\frac{dy}{dx_0}$ which represents a differential value of the output data y (or output $x_n$) with respect to the input data $x_0$ may be obtained with an output of a n-th layer.

In an example, the training method may include operation 230 that trains the first neural network and the second neural network, based on ground truth data of the output data and ground truth data of a differential value of the output data with respect to the input data. For example, the first neural network and the second neural network may be trained based on a first loss function and a second loss function. The first loss function may be based on ground truth data of the output data and an estimated value of the output data that is output in the forward propagation process of the first neural network. The second loss function may be based on the differential value obtained in operation 220 (i.e., an output differential value) and ground truth data of the differential value of the output data with respect to the input data. Since parameters are shared by the first neural network and the second neural network, the training of the first neural network and the second neural network may be understood as a process of updating the parameters shared by the first neural network and the second neural network.

When ground truth data of the output data is $\bar{y}$, the first neural network and the second neural network may be trained based on the first loss function $L_1(y - \overline{y})$.

When the ground truth data of the differential value of the output with respect to the input data is $\dfrac{\overline{dy}}{dx_0}$, the

$$L_2\left(\frac{dy}{dx_0} - \frac{\overline{dy}}{dx_0}\right)$$

second loss function may be defined as . In the training process of the first neural network and the second neural network, a gradient $\dfrac{dL_2}{dw_i}$ with respect to the second loss function $L_2\left(\dfrac{dy}{dx_0} - \dfrac{\overline{dy}}{dx_0}\right)$ may be calculated through backpropagation so as to update the parameters of the first neural network and the second neural network. Through the calculation of the gradient with respect to the second loss function, a second-order differential

function $\dfrac{d}{dw_i}\dfrac{dx_n}{dx_0}$ may be effectively calculated. That is, general backpropagation may be performed to train the first neural network and the second neural network, so that the differential value of the output data with respect to the input data may be output. The neural network may be trained to output the differential value of the output data with respect to the input data without requiring the calculating of the Hessian matrix for calculating a second-order differential with respect to the gradient.

More specifically, in an example,

$$\frac{dL_2}{dw_i} = \frac{d\tilde{x}_n}{dw_i}\frac{dL_2}{d\tilde{x}_n}$$

may be calculated to update the parameters of the first neural network and the second neural network. In an example,

$$\frac{dL_2}{d\tilde{x}_n}$$

may be calculated because the second loss function $L_2$ is obtained. In an example,

$$\frac{d\tilde{x}_n}{dw_i}$$

may be calculated through a backpropagation process. In an example,

$$\frac{d\tilde{x}_{i+1}}{d\tilde{x}_i} = \frac{\partial \tilde{x}_{i+1}}{\partial z_i}\frac{dz_i}{d\tilde{x}_i} + \frac{\partial \tilde{x}_{i+1}}{\partial \tilde{z}_i}\frac{d\tilde{z}_i}{d\tilde{x}_i}$$

may be calculated by using

$$\tilde{x}_{i+1} = f_i'(z_i) \times \tilde{z}_i$$

When the activation function $f_i(z_i)$ of the first neural network is a Relu function,

$$\frac{\partial \tilde{x}_{i+1}}{\partial z_i}$$

may be equal to 0 since $f_i'(z_i)$ is equal to 0 or 1. It may be expressed as

$$\frac{d\tilde{x}_{i+1}}{d\tilde{x}_i} = \frac{\partial \tilde{x}_{i+1}}{\partial \tilde{z}_i}\frac{d\tilde{z}_i}{d\tilde{x}_i} = f_i'(z_i)\frac{d\tilde{z}_i}{d\tilde{x}_i}.$$

It may be

$$\frac{d\tilde{x}_{i+1}}{d\tilde{x}_i} = \Sigma f_i'(z_i)W_i$$

due to $\tilde{z}_i = W_i\tilde{x}_i$. Thus, it may be calculated as

$$\frac{d\tilde{x}_{i+1}}{dw_i} = \frac{\partial \tilde{x}_{i+1}}{\partial \tilde{z}_i}\frac{d\tilde{z}_i}{dw_i} = f_i'(z_i)\frac{d\tilde{z}_i}{dw_i} = f_i'(z_i)\tilde{x}_i.$$

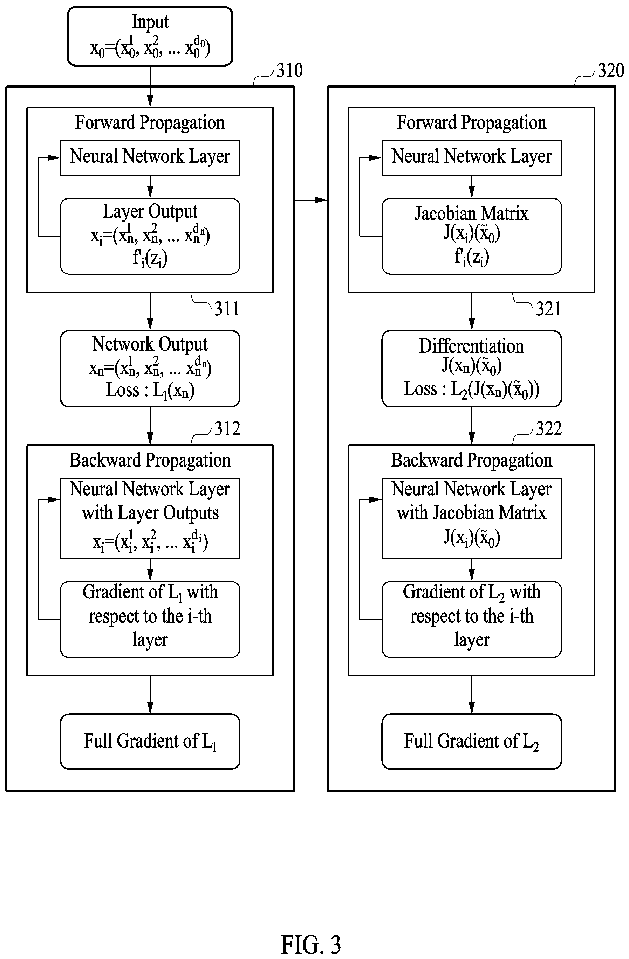

FIG. 3 illustrates an example framework for training a neural network according to one or more embodiments.

Referring to FIG. 3, in a non-limiting example, a first neural network 310 and a second neural network 320 may be trained in parallel based on a loss function. The first neural network 310 and the second neural network 320 may be trained in parallel through communication of some, or a portion of, data. For example, the first neural network 310 and the second neural network 320 may share some, or all, parameters with each other.

For example, a Jacobian matrix $J(x_i)(x_0)$ calculated in a forward propagation process 311 of the first neural network 310 and $f_i'(z_i)$ may be transmitted to the second neural network 320. The second neural network 320 may perform a forward propagation process 321 based on the $J(x_i)(x_0)$ and $f_i'(z_i)$ received from the first neural network 310.

In an example, a gradient may be calculated through a backpropagation process 312 based on the first loss function and a backpropagation process 322 based on the second loss function. Parameters shared by the first neural network 310 and the second neural network 320 may be updated based on the calculated gradient.

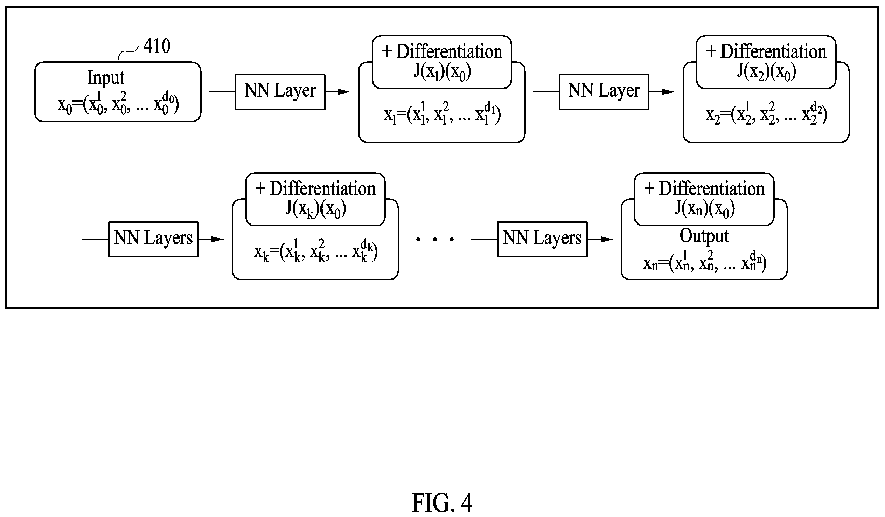

FIG. 4 illustrates an example of input/output data for each layer of a neural network according to one or more embodiments.

In a non-limiting example, a Jacobian matrix may be calculated only for some input data for which a differential value needs to be calculated. For example, in operation 210 of storing the Jacobian matrix as described above with reference to FIG. 2 may include selecting data, for which a differential value needs to be calculated, from input data and storing the Jacobian matrix obtained by differentiating an output of each layer of a first neural network with respect to the selected input data.

Referring to FIG. 4, there may be some elements, for which a differential value needs to be calculated, in input data 410 where $x_0=(x_0^1, x_0^2,..., x_0^{d0})$. For example, only $x_0^2$ and $x_0^{d0}$ in the input data 410 (i.e., $x_0=(x_0^1, x_0^2,..., x_0^{d0})$) may be the elements, for which a differential value needs to be calculated. The Jacobian matrix $J(x_i)(x_0)$ calculated by corresponding to each layer may include differential values with respect to $x_i^2$ and $x_i^{dk}$.

By calculating the Jacobian matrix by selecting some, or a portion of, data, for which a differential value needs to be calculated, from the input data 410, the amount of calculations may be reduced and a speed for those reduced calculations may be increased.

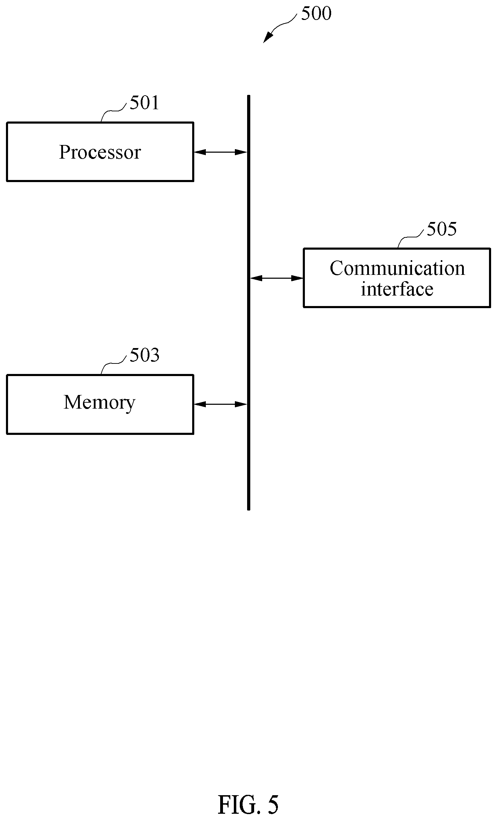

FIG. 5 is an example electronic apparatus according to one or more embodiments.

Referring to FIG. 5, in a non-limiting example, an electronic apparatus 500 may include a processor 501, a memory 503, and a communication interface 505 (e.g., an I/O interface). The electronic apparatus 500 according to an example may include a neural network or an apparatus in which the training method of the neural network described above with reference to FIGS. 1 to 4 is implemented.

The memory 503 may include computer-readable instructions. The processor 501 may be configured to execute computer-readable instructions, such as those stored in the memory 503, and through execution of the computer-readable instructions, the processor 501 is configured to perform one or more, or any combination, of the operations and/or methods described herein. The memory 503 may be a volatile or nonvolatile memory.

The processor 501 may be configured to execute computer-readable instructions, which when executed by the processor 501, to configure the processor 501 to perform one or more or all operations and/or methods described above with reference to FIGS. 1 to 4, and may include any one or a combination of two or more of, for example, a central processing unit (CPU), a graphic processing unit (GPU), a neural processing unit (NPU) and tensor processing units (TPUs), a processor core, a multi-core processor, a multiprocessor, an application-specific integrated circuit (ASIC), and a field-programmable gate array (FPGA), but is not limited to the above-described examples. The processor 501 may implement at least part of a neural network. For example, the processor 501 may perform any one of estimating output data with respect to input data through forward propagation of a first neural network and obtaining a differential value of the output data with respect to the input data through forward propagation of a second neural network based on differential data obtain by differentiating an output of each layer of the first neural network with respect to the input data.

The processor 501, according to an example, may perform operations of the training method of the neural network for obtaining the differential value of the output data with respect to the input data described above with reference to FIGS. 1 to 4.

In an example, the processor 501 may calculate differential data obtained by differentiating the output of each layer of the first neural network with respect to the input data. For example, in calculating the differential data, the processor 501 may select, from the input data, data for which a differential value needs to be calculated and may calculate the differential data obtained by differentiating the output of each layer of the first neural network with respect to the selected input data.

The memory 503 may include computer/processor-readable instructions. The processor 501 may be configured to execute the instructions, such as those stored in the memory 503, and through execution of the computer-readable instructions, the processor 501 is configured to perform one or more, or any combination, of the operations and/or methods described herein. The memory 503 may be a volatile or nonvolatile memory.

In an example, the memory 503 may store data related to the neural network that obtains the differential value of the output data with respect to the input data described above with reference to FIGS. 1 to 4. The memory 503 may store parameters of the first neural network and the second neural network. For example, the memory 503 may store the Jacobian matrix obtained by differentiating the output of each layer of the first neural network with respect to the input data. For example, the memory 503 may store a differential value of an activation function of each layer of the first neural network, wherein the differential value is obtained through forward propagation of the first neural network.

The communication interface 505 (e.g., an I/O and/or network interface) may include user interface may provide the capability of inputting and outputting information regarding the electronic device 100, the neural network 110, the electronic apparatus 500, and other devices. The communication interface 505 may include a network interface for connecting to a network and a data transfer channel with a mobile storage medium.

In an example, the memory 503 may not be a component of the apparatus 500 but may be included in an external storage device (or database) accessible from the apparatus 500. In this example, the apparatus 500 may receive data stored in the external storage device through the communication interface 505 and transmit data to be stored in the memory 503.

According to an example, the memory 503 may store the neural network for estimating the differential value of the output data with respect to the input data described above with reference to FIGS. 1 to 4 or the instructions, in which operations of the training method of the neural network are implemented.

The electronic apparatus 500 may further include other components in the drawings. For example, the apparatus electronic 500 may further include an input/output interface including an input device and an output device as hardware for interfacing with the communication interface 505. In addition, for example, the apparatus 500 may further include other components such as a transceiver, various sensors, and a database.

The neural networks, processors, electronic devices, memories, electronic apparatus 500, processor 501, memory 503, communications interface 505, electronic device 100, neural network 110, first neural network 310, and second neural network 320 described herein and disclosed herein described with respect to FIGS. 1-5 are implemented by or representative of hardware components. As described above, or in addition to the descriptions above, examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. As described above, or in addition to the descriptions above, example hardware components may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-5 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media, and thus, not a signal per se. As described above, or in addition to the descriptions above, examples of a non-transitory computer-readable storage medium include one or more of any of read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks , and/or any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above and all drawing disclosures, the invention is defined in the enclosed claims.

**Claims**

1. A processor-implemented method, the method comprising:

   generating respective first neural network differential data by differentiating a respective output of each layer of a first neural network with respect to input data provided to the first neural network that estimates output data from the input data, by a forward propagation process of the first neural network;
   generating, using a second neural network, an output differential value of the output data with respect to the input data using the respective first neural network differential data; and
   training the first neural network and the second neural network based on ground truth data of the output data and ground truth data of the output differential value.

2. The method of claim 1, further comprising generating, by a layer of the second neural network, second differential data obtained by differentiating, with respect to the input data, an output of a layer of the first neural network from first differential data, of the respective first neural network differential data, obtained by differentiating an output of another layer previous to the layer of the first neural network, with respect to the input data, based on parameters of the first neural network and a first differential value of an activation function of the layer of the first neural network.

3. The method of claim 2, wherein a second differential value of the second differential data with respect to a parameter of the layer of the first neural network is calculated by multiplying the first differential data by the first differential value.

4. The method of one of claims 1 to 3, wherein an activation function of a layer of the second neural network comprises a function that multiplies a differential value of an activation function of a layer of the first neural network that corresponds to the layer of the second neural network.

5. The method of one of claims 1 to 4, further comprising storing a respective differential value of a corresponding activation function for each layer of the first neural network in a forward propagation process of the first neural network.

6. The method of one of claims 1 to 5, wherein parameters of the first neural network for the estimation of the output data are the same as parameters of the second neural network.

7. The method of one of claims 1 to 6, wherein the generating of the respective first neural network differential data further comprises:

   determining select input data among plural input data, for which a calculation of differential value is determined to be needed; and
   for each of the select input data, storing corresponding respective first neural network differential data obtained by respectively differentiating the outputs of each layer of the first neural network with a corresponding select input data.

8. A non-transitory computer-readable storage medium storing instructions that, when executed by a processor, cause the processor to perform the method of one of claims 1 to 7.

9. An apparatus, comprising:

   a processor configured to:

      estimate output data with respect to input data by differentiating a respective output of each layer of a first neural network with respect to input data provided to the first neural network by a forward propagation process of the first neural network; and

generate an output differential value of the output data with respect to the input data using respective first neural network differential data through forward propagation of a second neural network; and

a memory configured to store the differential data.

10. The apparatus of claim 9, wherein the memory is further configured to store a respective differential value of an activation function for each layer of the first neural network, wherein the respective differential value is obtained through the forward propagation of the first neural network.

11. The apparatus of claim 9 or 10, wherein an activation function of a layer of the second neural network comprises a function that multiplies a differential value of an activation function of a layer of the first neural network that corresponds to the layer of the second neural network.

12. The apparatus of one of claims 9 to 11, wherein parameters of the first neural network for the estimation of the output data are the same as parameters of the second neural network.

13. The apparatus of one of claims 9 to 12, wherein the first neural network and the second neural network are trained based on a first loss function and a second loss function, wherein the first loss function is based on ground truth of the output data and an estimated value of the output data that is output from the forward propagation of the first neural network, and the second loss function is based on the output differential value and ground truth data of the output differential value with respect to the input data.

14. The apparatus of one of claims 9 to 13, wherein the second neural network comprises a layer defined to output second differential data obtained by differentiating, with respect to the input data, an output of a layer of the first neural network from first differential data, of the respective first neural network differential data, obtained by differentiating an output of another layer, previous to the layer of the first neural network, with respect to the input data, based on parameters of the first neural network and a first differential value of an activation function of the layer of the first neural network, and
wherein a second differential value of the second differential data with respect to a parameter of the layer of the first neural network is calculated by multiplying the first differential data by the first differential value.

15. The apparatus of one of claims 9 to 14, wherein the processor is configured to calculate differential data obtained by differentiating the output of each layer of the first neural network with respect to the input data, and
wherein, in the calculating of the differential data, the processor is configured to:

determine select input data among plural input data, for which a calculation of a differential value is determined to be needed; and
for each of the select input data, calculate the differential data corresponding respectively to first neural network differential data obtained by respectively differentiating the outputs of each layer of the first neural network with a corresponding select input data.

<u>100</u>

110

$x_0$
(input)

Neural
network

y
(output)

$\overline{y}$
(GT)

$\dfrac{dy}{dx_0}$
(Backward
propagation)

$\dfrac{\overline{dy}}{dx_0}$
(GT)

FIG. 1

Start

Store differential data obtained by differentiating output of each layer of first neural network with respect to input data in forward propagation process of first neural network that estimates output data from input data ⁓210

Obtain differential value of output data with respect to input data in forward propagation process of second neural network defined to output differential data ⁓220

Train first neural network and second neural network, based on ground truth data of output data and ground truth data of differential value of output data with respect to input data ⁓230

End

FIG. 2

Input
$x_0 = (x_0^1, x_0^2, \ldots x_0^{d_0})$

310

320

**Forward Propagation**

Neural Network Layer

Layer Output
$x_i = (x_n^1, x_n^2, \ldots x_n^{d_n})$
$f_i'(z_i)$

311

Network Output
$x_n = (x_n^1, x_n^2, \ldots x_n^{d_n})$
Loss : $L_1(x_n)$

312

**Backward Propagation**

Neural Network Layer
with Layer Outputs
$x_i = (x_i^1, x_i^2, \ldots x_i^{d_i})$

Gradient of $L_1$ with
respect to the i-th
layer

Full Gradient of $L_1$

**Forward Propagation**

Neural Network Layer

Jacobian Matrix
$J(x_i)(\tilde{x}_0)$
$f_i'(z_i)$

321

Differentiation
$J(x_n)(\tilde{x}_0)$
Loss : $L_2(J(x_n)(\tilde{x}_0))$

322

**Backward Propagation**

Neural Network Layer
with Jacobian Matrix
$J(x_i)(\tilde{x}_0)$

Gradient of $L_2$ with
respect to the i-th
layer

Full Gradient of $L_2$

FIG. 3

FIG. 4

500

501

Processor

505

Communication
interface

503

Memory

FIG. 5

Europäisches
Patentamt

European
Patent Office

Office européen
des brevets

## EUROPEAN SEARCH REPORT

Application Number

EP 23 19 5955

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TSAY CALVIN: "Sobolev trained neural network surrogate models for optimization", COMPUTERS & CHEMICAL ENGINEERING, PERGAMON PRESS, OXFORD, GB, vol. 153, 23 June 2021 (2021-06-23), XP086726783, ISSN: 0098-1354, DOI: 10.1016/J.COMPCHEMENG.2021.107419 [retrieved on 2021-06-23] * the whole document * | 1-15 | INV. G06N3/045 G06N3/084 |

-----

**TECHNICAL FIELDS SEARCHED (IPC)**

G06N

The present search report has been drawn up for all claims

| Place of search | Date of completion of the search | Examiner |
|---|---|---|
| The Hague | 13 February 2024 | Szymanski, Francois |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)